# EUROPEAN PATENT SPECIFICATION

(11) **EP 3 641 498 B1**
(45) Date of publication and mention of the grant of the patent: **16.12.2020**
(21) Application number: 19215533.1
(22) Date of filing: 24.06.2016
(51) Int. Cl.: H05B 6/68, F24C 7/02, F24C 7/08

(54) **MICROWAVE OVEN CIRCUIT, CONTROL METHOD AND CONTROL DEVICE OF MICROWAVE OVEN CIRCUIT AND MICROWAVE OVEN**
MIKROWELLENOFENSCHALTUNG, STEUERUNGSVERFAHREN UND STEUERUNGSVORRICHTUNG FÜR MIKROWELLENOFEN UND MIKROWELLENOFEN
CIRCUIT DE FOUR À MICRO-ONDES, PROCÉDÉ DE COMMANDE, DISPOSITIF DE COMMANDE D'UN CIRCUIT DE FOUR À MICRO-ONDES ET FOUR À MICRO-ONDES

(30) Priority: 29.12.2015 CN 201511027305; 29.12.2015 CN 201521139218 U; 29.12.2015 CN 201511030511
(43) Date of publication of application: 22.04.2020
(62) Divisional of application: 16880461.5
(73) Proprietor: Guangdong Midea Kitchen Appliances Manufacturing Co., Ltd., Foshan, Guangdong 528311 (CN); Midea Group Co., Ltd., Foshan, Guangdong 528311 (CN)
(72) Inventor: LIN, Yueyue, Foshan, Guangdong 528311 (CN); ZHOU, Xiaojin, Foshan, Guangdong 528311 (CN)
(74) Representative: Lam, Alvin

(56) References cited:
- US-A- 4 405 904
- US-A- 5 395 453
- US-A1- 2010 102 797
- US-A1- 2010 181 307

## Description

### Field of the Invention

The present invention relates to the technical field of microwave ovens, and in particular to a microwave oven circuit, a control method of the microwave oven circuit, a control device of the microwave oven circuit control device and a microwave oven.

### Background of the Invention

An inverter in a microwave oven circuit has the advantages of light weight, high power factor, continuously adjustable power and the like relative to a transformer power supply, and thus has been widely favoured by users. With the extensive use of inverters, the repair rate in the market has been generally increased, and it can be seen from repair data that IGBTs (Insulated Gate Bipolar Transistors) and rectifier bridge stacks account for the most of the damage. The control mode at present has received severe challenges.

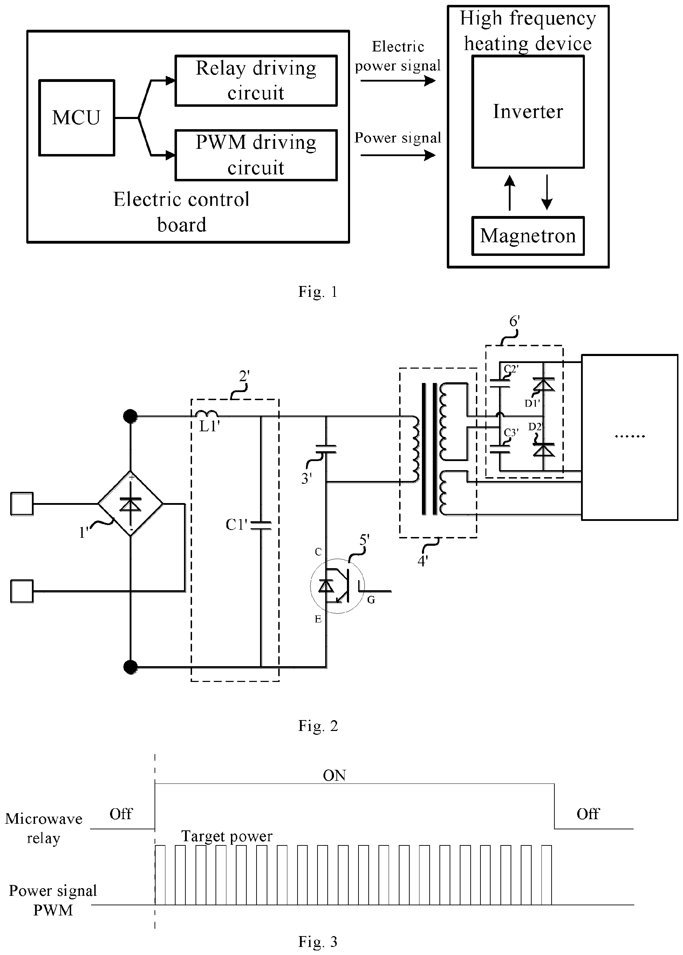

As shown in Fig. 1, an existing variable frequency microwave oven control system includes an electric control board and a high frequency heating device. The electronic control board includes an MCU, a relay driving module and a PWM (Pulse Width Modulation) driving module, the relay driving module transmits an electric power signal to an inverter in the high frequency heating device, and the PWM driving circuit transmits a power signal to the inverter in the high frequency heating device, and the inverter drives a magnetron to generate microwaves according to the received signal so as to achieve the purpose of heating food.

As shown in Fig. 2, which is a structural schematic diagram of the inverter in the existing microwave oven circuit, the working principle of the inverter is as follows: after being rectified by a rectifier bridge stack 1', electric supply flows through a filter circuit 2' consisting of an inductor L1' and a capacitor C1' and then is led to a resonant network consisting of a resonant capacitor 3' and a high frequency step-up transformer 4', and the resonant energy is controlled by the on-off of an IGBT 5' to be fed back to a secondary stage of the high frequency step-up transformer 4', a high voltage for driving the magnetron is generated through a voltage doubling circuit 6' consisting of high voltage capacitors C2', C3' and high voltage diodes D1', D2', and then is transmitted to the magnetron so as to drive the magnetron to generate microwaves.

The magnitude of the resonant current can be changed by changing the switching frequency of the IGBT 5' so as to change the power of the magnetron.

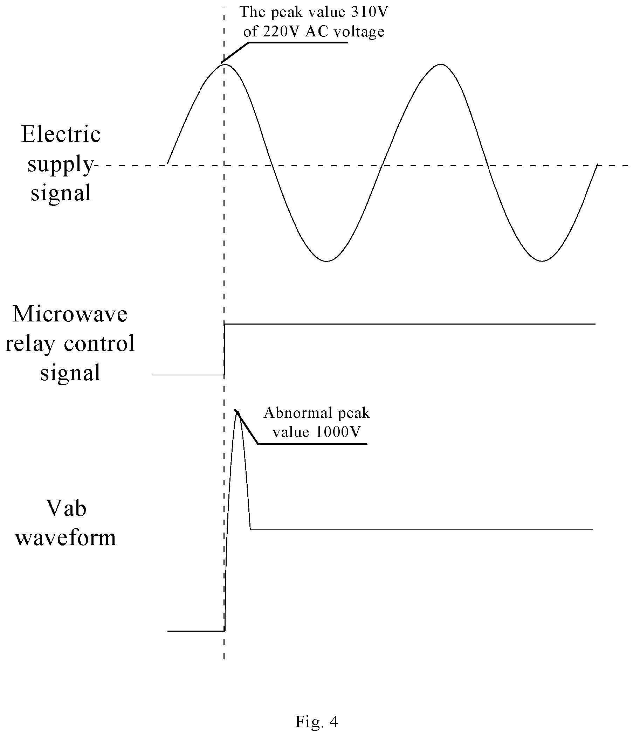

As shown in Fig. 3, in control timing proposed by the related art, when a microwave relay is started, it provides an electric power signal for the inverter and meanwhile transmits a target power signal PWM to the inverter to reach the desired power. However, when the microwave relay is turned on, if the voltage across the capacitor C2' in the inverter is not zero, if the voltage of the electric supply is higher at the moment, a higher abnormal voltage is generated across the rectifier bridge stack 1' at the peak value, which is up to more than 1,000 volts and is very likely to damage the bridge stack. It is specifically as shown in Fig. 4:

Fig. 4 shows a voltage waveform of the electric supply signal when the inverter is turned on, a control signal waveform of the microwave relay, and a voltage waveform (i.e., a Vab waveform) across the rectifier bridge stack 1' in the related art. Assuming that the electric supply is 220V AC, if the electric supply signal is at the peak value 310V, and the voltage across the capacitor C2' is 0 when the microwave relay is turned on, at the moment when the microwave relay is turned on, as the voltage across the capacitor C2' cannot be changed abruptly, the peak value 310V of the electric supply is directly added to the inductor L1', and due to the characteristic of the inductor (i.e., the current cannot be abruptly changed), a very large reverse voltage is generated to prevent the current from increasing, in this way, a very large voltage is generated at the front end, namely, the port of the rectifier bridge stack 1', which is up to 1000V and is very likely to damage the rectifier bridge stack 1'. The theoretical analysis is also consistent with the market feedback data, that is, the maintenance rate of the rectifier bridge stack 1' remains high.

Meanwhile, another component having a high maintenance rate is the IGBT 5', because the G pole voltage of the IGBT cannot exceed 25V, but in the existing control mode, when the microwave relay is turned on, the G pole of the IGBT occasionally has a voltage of higher than 33V.

Therefore, how to reduce the voltage across the rectifier bridge stack when the inverter is turned on to avoid damage to the rectifier bridge stack due to the excessively high voltage across the rectifier bridge stack, and meanwhile how to prevent the G pole of the IGBT from being damaged by the overlarge voltage have become technical problems to be solved urgently.

US 2010/102797 A1 discloses a microwave oven circuit comprising a magnetron, an inverter circuit for driving the magnetron to work, and a control device, the control device comprising a current detection unit for detecting a current in the magnetron.

### Summary of the Invention

Aspects of the present invention are set out in the accompanying claims.

According to one aspect, there is described a control method of a microwave oven circuit, wherein the microwave oven circuit comprises a magnetron and an inverter circuit for driving the magnetron to work, and the control method comprises:
when the inverter circuit needs to be started, detecting a zero crossing point of an electric supply signal for supplying power to the microwave oven circuit;
when the electric supply signal is detected to reach the zero crossing point, controlling the inverter circuit to be powered on;
when the power-on time length of the inverter circuit reaches a first predetermined time length, inputting a first power signal with a frequency lower than a target frequency to the inverter circuit;
detecting the current in the magnetron; and
when the current in the magnetron reaches a predetermined current value, inputting a second power signal with a frequency equal to the target frequency to the inverter circuit.

In another aspect, there is described a microwave oven circuit comprising a magnetron, an inverter circuit for driving the magnetron to work, and a control device; the control device comprising: a current detection unit for detecting a current in the magnetron; a zero crossing point detection unit for, when the inverter circuit needs to be started, detecting a zero crossing point of an electric supply signal for supplying power to the microwave oven circuit; a first control unit for, when the zero crossing point detection unit detects that the electric supply signal reaches the zero crossing point, controlling the inverter circuit to be powered on; and a second control unit for, when the power-on time length of the inverter circuit reaches a first predetermined time length, inputting a first power signal with a frequency lower than a target frequency to the inverter circuit, and when the current detection unit detects that the current in the magnetron reaches a predetermined current value, inputting a second power signal with a frequency equal to the target frequency to the inverter circuit.

In another aspect, there is described a microwave oven comprising the microwave oven circuit as described above. Additional aspects and advantages of the invention will be set forth in the following description.

### Brief Description of the Drawings

The above and/or additional aspects and advantages of the present invention will become apparent from the following description of embodiments in conjunction with the drawings, wherein:
Fig. 1 shows a structural schematic diagram of a control system of a variable frequency microwave oven in related art;
Fig. 2 shows a schematic diagram of a circuit structure of an inverter in a microwave oven circuit in related art;
Fig. 3 shows a schematic diagram of control timing of the inverter in the microwave oven circuit in related art;
Fig. 4 shows a schematic diagram of a voltage waveform of an electric supply signal, a control signal waveform of a microwave relay and a voltage waveform across a rectifier bridge stack when the inverter is started in related art;
Fig. 5 shows a structural schematic diagram of a microwave oven circuit according to an embodiment of the present invention;
Fig. 6 shows a structural schematic diagram of an inverter circuit according to an embodiment of the present invention;
Fig. 7 shows a structural schematic diagram of a filter circuit in an electric control board according to an embodiment of the present invention;
Fig. 8 shows a schematic flow diagram of a control method of a microwave oven circuit according to an embodiment of the present invention;
Fig. 9 shows a structural block diagram of a control device of a microwave oven circuit according to an embodiment of the present invention;
Fig. 10 shows a schematic diagram of timing of signals in a control process of a microwave oven circuit according to an embodiment of the present invention;
Fig. 11 shows a process schematic diagram of starting the inverter as shown in Fig. 10;
Fig. 12 shows a process schematic diagram of turning off the inverter as shown in Fig. 10.

### Detailed Description of the Embodiments

In order that the above objectives, features and advantages of the present invention can be understood more clearly, the present invention will be further described in detail below in conjunction with the drawings and specific embodiments. It should be noted that the embodiments of the present application and the features in the embodiments can be combined with each other without conflict.

Many specific details are set forth in the following description in order to fully understand the present invention. However, the present invention can also be implemented in other manners than those described herein. Therefore, the protection scope of the present invention is not limited to the specific embodiments disclosed below.

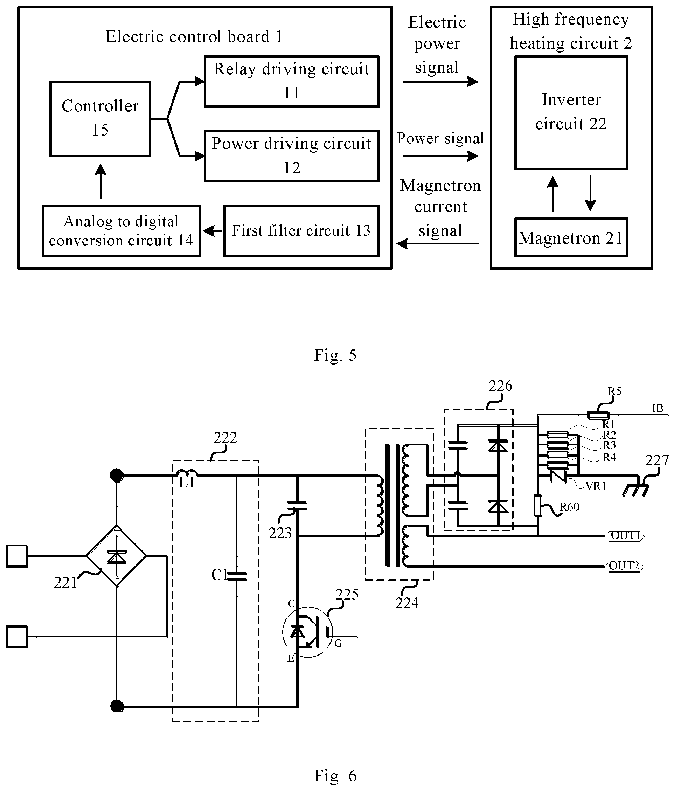

Fig. 5 shows a structural schematic diagram of a microwave oven circuit according to an embodiment of the present invention;
As shown in Fig. 5, the microwave oven circuit according to the embodiment of the present invention includes an electric control board 1 and a high frequency heating circuit 2; wherein the electric control board 1 includes:
a relay driving circuit 11 used for transmitting an electric power signal to the high frequency heating circuit 2; a power driving circuit 12 used for sending a power signal to the high frequency heating circuit 2; a first filter circuit 13 connected to a signal feedback end (not shown in Fig. 5) of the high frequency heating circuit 2 and used for performing filtering processing on a magnetron current signal fed back by the high frequency heating circuit 2; an analog to digital conversion circuit 14 connected to the first filter circuit 13 and used for performing analog to digital conversion processing on the signal output by the first filter circuit 13; and a controller 15 connected to the analog to digital conversion circuit 14, the relay driving circuit 11 and the power driving circuit 12 and used for controlling the electric power signal transmitted by the relay driving circuit 11 and controlling the power signal transmitted by the power driving circuit 12 according to the signal output by the analog to digital conversion circuit 14.

The microwave oven circuit according to the above embodiment of the present invention can further have the following technical features:
According to one embodiment of the present invention, the high frequency heating circuit 2 includes a magnetron 21 used for generating microwaves; an inverter circuit 22 connected to the magnetron 21 and used for receiving the electric power signal transmitted by the relay driving circuit 11 and the power signal transmitted by the power driving circuit 12, and driving the magnetron to generate the microwaves according to the electric power signal and the power signal; and a sampling feedback circuit (not shown in Fig. 5) used for sampling the current in the magnetron 21 and feeding back a sampled current signal of the magnetron 21 to the electric control board 1.

As shown in Fig. 6, the inverter circuit 22 according to one embodiment of the present invention includes:
a rectifier circuit 221 connected to an AC power supply and used for rectifying AC input by the AC power supply; a second filter circuit 222 connected to the rectifier circuit 221 and used for performing filtering processing on a signal output by the rectifier circuit 221; a resonant circuit including a resonant capacitor 223 and a high frequency step-up transformer 224, wherein the resonant capacitor 223 is connected to two ends of the second filter circuit 222 in parallel after being connected with an IGBT 225 in series, and a primary coil of the high frequency step-up transformer 224 is connected with the resonant capacitor 223 in parallel; and a voltage doubling circuit 226 connected to a secondary coil of the high frequency step-up transformer 224 and used for generating a voltage for driving the magnetron 21.

The sampling feedback circuit in the high frequency heating circuit 2 includes a current detection loop, wherein the current detection loop is composed of four resistors R1 to R4 and a varistor VR1, which are connected in parallel, R5 is a current limiting resistor, R60 is a dummy load, a chassis ground 227 is connected to the anode of the magnetron 21, the cathode of the magnetron 21 is connected to OUT1 and OUT2, and OUT1 and OUT2 are connected to the another winding of the secondary coil of the high frequency step-up transformer 224 for driving a filament voltage of the magnetron 21. When the magnetron 21 works, the current flows through the anode, i.e., the chassis ground 227, and flows to the cathode to form a loop, in this way, there is a voltage across R1 to R4, and a current signal IB in the magnetron is detected by detecting the voltage.

According to one embodiment of the present invention, the rectifier circuit 221 includes a rectifier bridge circuit.

According to one embodiment of the present invention, the second filter circuit 222 includes an LC filter circuit, namely, an LC filter circuit composed of an inductor L1 and a capacitor C1.

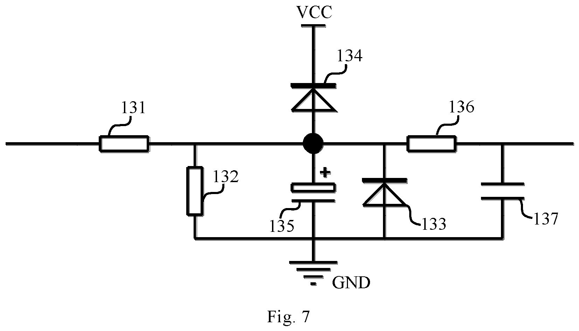

As shown in Fig. 7, according to one embodiment of the present invention, the first filter circuit 13 includes: a first resistor 131, wherein a first end of the first resistor 131 serves as an input end of the first filter circuit 13; a second resistor 132 connected between a second end of the first resistor 131 and the ground; a first clamp device 133 connected with the second resistor 132 in parallel; a second clamp device 134 connected between the second end of the first resistor 131 and a DC power supply; an electrolytic capacitor 135 connected with the second resistor 132 in parallel; a current limiting device 136, wherein a first end of the current limiting device 136 is connected to the second end of the first resistor 131, and a second end of the current limiting device 136 serves as an output end of the first filter circuit; and a capacitive element 137 connected between the second end of the current limiting device 136 and the ground.

Specifically, after the magnetron current signal is input to the first filter circuit 13, the voltage is divided by the first resistor 131 and the second resistor 132 and is clamped by the first clamp device 133 and the second clamp device 134, so that the voltage is not higher than the DC power supply (VCC), nor lower than the GND (ground), and meanwhile, the filtering processing can be performed by the electrolytic capacitor 135 and the capacitive element 137 to convert the high frequency current signal into a low frequency DC signal. By connecting the capacitive element 137 between the second end of the current limiting device 136 and the ground, i.e., connecting the capacitive element to a position close to the output end of the first filter circuit 13, a better filtering effect can be achieved.

According to one embodiment of the present invention, the first clamp device 133 includes a first diode, a cathode of the first diode is connected to the second end of the first resistor 131, and an anode of the first diode is grounded.

According to one embodiment of the present invention, the second clamp device 134 includes a second diode, an anode of the second diode is connected to the second end of the first resistor 131, and a cathode of the second diode is connected to the DC power supply.

According to one embodiment of the present invention, the current limiting device 136 includes a resistive element.

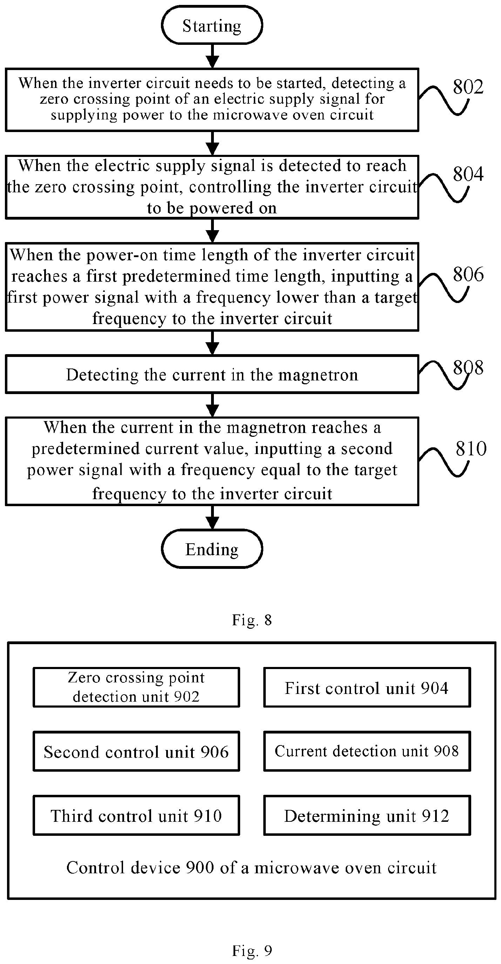

Fig. 8 shows a schematic flow diagram of a control method of a microwave oven circuit according to an embodiment of the present invention.

As shown in Fig. 8, the control method of the microwave oven circuit according to the embodiment of the present invention includes:
Step 802, when the inverter circuit needs to be started, detecting a zero crossing point of an electric supply signal for supplying power to the microwave oven circuit;
step 804, when the electric supply signal is detected to reach the zero crossing point, controlling the inverter circuit to be powered on;
step 806, when the power-on time length of the inverter circuit reaches a first predetermined time length, inputting a first power signal with a frequency lower than a target frequency to the inverter circuit;
step 808, detecting the current in the magnetron; and
step 810, when the current in the magnetron reaches a predetermined current value, inputting a second power signal with a frequency equal to the target frequency to the inverter circuit.

When the inverter circuit needs to be started, the zero crossing point of the electric supply signal is detected, and when the electric supply signal is detected to reach the zero crossing point, the inverter circuit is controlled to be powered on, therefore when the inverter circuit is powered on, a reverse voltage across a rectifier bridge stack can be effectively reduced, thereby improving the reliability of the microwave oven circuit and prolonging the service life of the rectifier bridge stack.

After the inverter circuit is powered on, the power signal is not directly input to the inverter circuit, but is input after delaying the first predetermined time length, so that power-on initialization time can be reserved for electronic devices in the inverter circuit to ensure the working stability of the inverter circuit.

When the power-on time length of the inverter circuit reaches the first predetermined time length, the first power signal with the frequency lower than the target frequency is input to the inverter circuit, and when it is detected the current in the magnetron reaches the predetermined current value (the predetermined current value indicates that the magnetron starts working), the power signal with the frequency equal to the target frequency is input to the inverter circuit, so that the inverter circuit can be started at a smaller power, and when the magnetron starts working, the inverter circuit operates with full power (i.e., the power signal with the target frequency is input), thereby avoiding the problem of power overshoot during the startup of the inverter circuit.

The control method of the microwave oven circuit according to the above embodiment of the present invention can further have the following technical features:
According to one embodiment of the present invention, the microwave oven circuit further includes a fan circuit and a turntable circuit, and the control method further includes:
when an instruction of starting a microwave oven is received, if the electric supply signal is detected to reach the zero crossing point, controlling the fan circuit and the turntable circuit to be turned on; and when the fan circuit and the turntable circuit are controlled to be turned on for a second predetermined time length, determining that the inverter circuit needs to be started.

Both a fan and a turntable are inductive loads, so electromagnetic radiation and voltage interference are generated when they are turned on, thus affecting the voltage of the G pole of the IGBT, therefore, when the instruction of starting the microwave oven is received, and when the electric supply signal is detected to reach the zero crossing point, the fan circuit and the turntable circuit are controlled to be turned on, and after delaying the second predetermined time length, the inverter circuit is controlled to be powered on (i.e., it is determined that the inverter circuit needs to be started), in this way, when the fan circuit and the turntable circuit are turned on, the interference to the voltage of the G pole of the IGBT can be effectively reduced so as to prevent the G pole of the IGBT from being damaged by the overlarge voltage and to prolong the service life of the IGBT.

According to one embodiment of the present invention, the control method further includes: when an instruction of turning off the microwave oven is received, stopping inputting the power signal to the inverter circuit; and when the time length of stopping inputting the power signal to the inverter circuit reaches a third predetermined time length, if the electric supply signal is detected to reach the zero crossing point, controlling the inverter circuit to be powered off.

When the input of the power signal to the inverter circuit is stopped, the inverter circuit undergoes a process in which the power is reduced to zero and a corresponding discharging process. Therefore, when the instruction of turning off the microwave oven is received, the input of the power signal to the inverter circuit is stopped, and after delaying the third predetermined time length, and when the electric supply signal is detected to reach the zero crossing point, the inverter circuit is controlled to be powered off, in this way, it is ensured that after the power of the inverter circuit is reduced to 0 and when the electric supply signal is at the zero crossing point, the inverter circuit is powered off, thus avoiding an abnormal problem generated by directly controlling the inverter circuit to be powered off when the input of the power signal is stopped.

According to one embodiment of the present invention, the control method further includes: after the inverter circuit is controlled to be powered off for a fourth predetermined time length, if the electric supply signal is detected to reach the zero crossing point, controlling the fan circuit and the turntable circuit to be powered off.

When the inverter circuit is controlled to be powered off for the fourth predetermined time length, and when the electric supply signal is detected to reach the zero crossing point, the fan circuit and the turntable circuit are controlled to be powered off, therefore the interference to the voltage of the G pole of the IGBT can be reduced, when the inductive loads (i.e., the fan and the turntable) are turned off.

According to one embodiment of the present invention, the first predetermined time length is greater than or equal to 300 milliseconds; the second predetermined time length is greater than or equal to 200 milliseconds; the third predetermined time length is greater than or equal to 200 milliseconds; and the fourth predetermined time length is greater than or equal to 600 milliseconds.

According to one embodiment of the present invention, the frequency of the first power signal is the lowest frequency for maintaining the continuous work of the inverter circuit, or
the frequency of the first power signal is less than or equal to half of the lowest frequency for maintaining the continuous work of the inverter circuit.

According to one embodiment of the present invention, the predetermined current value is less than or equal to one-sixth of the current value in the magnetron when the inverter circuit works at the input of the target frequency.

In any one of the above embodiments, the power-on and power-off of the inverter circuit can be controlled by a microwave relay.

Fig. 9 shows a structural block diagram of a control device of a microwave oven circuit according to an embodiment of the present invention.

As shown in Fig. 9, the control device 900 of the microwave oven circuit according to the embodiment of the present invention includes: a zero crossing point detection unit 902, a first control unit 904, a second control unit 906 and a current detection unit 908.

The zero crossing point detection unit 902 is used for, when the inverter circuit needs to be started, detecting a zero crossing point of an electric supply signal for supplying power to the microwave oven circuit; the first control unit 904 is used for, when the zero crossing point detection unit 902 detects that the electric supply signal reaches the zero crossing point, controlling the inverter circuit to be powered on; the second control unit 906 is used for, when the power-on time length of the inverter circuit reaches a first predetermined time length, inputting a first power signal with a frequency lower than a target frequency to the inverter circuit, and when the current detection unit 908 detects that the current in the magnetron reaches a predetermined current value, inputting a second power signal with a frequency equal to the target frequency to the inverter circuit. The current detection unit 908 is used for detecting the current in the magnetron.

When the inverter circuit needs to be started, the zero crossing point of the electric supply signal is detected, and when the electric supply signal is detected to reach the zero crossing point, the inverter circuit is controlled to be powered on, therefore when the inverter circuit is powered on, a reverse voltage across a rectifier bridge stack can be effectively reduced, thereby improving the reliability of the microwave oven circuit and prolonging the service life of the rectifier bridge stack.

After the inverter circuit is powered on, the power signal is not directly input to the inverter circuit, but is input after delaying the first predetermined time length, so that power-on initialization time can be reserved for electronic devices in the inverter circuit to ensure the working stability of the inverter circuit.

When the power-on time length of the inverter circuit reaches the first predetermined time length, the first power signal with the frequency lower than the target frequency is input to the inverter circuit, and when it is detected the current in the magnetron reaches the predetermined current value (the predetermined current value indicates that the magnetron starts working), the power signal with the frequency equal to the target frequency is input to the inverter circuit, so that the inverter circuit can be started at a smaller power, and when the magnetron starts working, the inverter circuit operates with full power (i.e., the power signal with a frequency equal to the target frequency is input), thereby avoiding the problem of power overshoot during the startup of the inverter circuit.

The control device 900 of the microwave oven circuit according to the above embodiment of the present invention can further have the following technical features:
According to one embodiment of the present invention, the microwave oven circuit further includes a fan circuit and a turntable circuit, and the control device 900 further includes: a third control unit 910 used for, when an instruction of starting a microwave oven is received, if the current detection unit 908 detects that the electric supply signal reaches the zero crossing point, controlling the fan circuit and the turntable circuit to be turned on; and a determining unit 912 used for, when the third control unit 910 controls the fan circuit and the turntable circuit to be turned on for a second predetermined time length, determining that the inverter circuit needs to be started.

Both a fan and a turntable are inductive loads, so electromagnetic radiation and voltage interference are generated when they are turned on, thus affecting the voltage of the G pole of the IGBT, therefore, when the instruction of starting the microwave oven is received, and when the electric supply signal is detected to reach the zero crossing point, the fan circuit and the turntable circuit are controlled to be turned on, after delaying the second predetermined time length, the inverter circuit is controlled to be powered on (i.e., it is determined that the inverter circuit needs to be started), in this way, when the fan circuit and the turntable circuit are turned on, the interference to the voltage of the G pole of the IGBT can be effectively reduced so as to prevent the G pole of the IGBT from being damaged by the overlarge voltage and to prolong the service life of the IGBT.

According to one embodiment of the present invention, the second control unit 906 is further used for: when an instruction of turning off the microwave oven is received, stopping inputting the power signal to the inverter circuit; and the first control unit 904 is further used for: when the time length of stopping inputting the power signal to the inverter circuit by the second control unit 906 reaches a third predetermined time length, if the zero crossing point detection unit 902 detects that the electric supply signal reaches the zero crossing point, controlling the inverter circuit to be powered off.

When the input of the power signal to the inverter circuit is stopped, the inverter circuit undergoes a process in which the power is reduced to zero and a corresponding discharging process. Therefore, when the instruction of turning off the microwave oven is received, the input of the power signal to the inverter circuit is stopped, and after delaying the third predetermined time length, and when the electric supply signal is detected to reach the zero crossing point, the inverter circuit is controlled to be powered off, in this way, it is ensured that after the power of the inverter circuit is reduced to 0 and when the electric supply signal is at the zero crossing point, the inverter circuit is powered off, thus avoiding an abnormal problem generated by directly controlling the inverter circuit to be powered off when the input of the power signal is stopped.

According to one embodiment of the present invention, the third control unit 910 is further used for: after the inverter circuit is controlled by the first control unit 904 to be powered off for a fourth predetermined time length, if the electric supply signal is detected to reach the zero crossing point, controlling the fan circuit and the turntable circuit to be powered off.

When the inverter circuit is controlled to be powered off for the fourth predetermined time length, if the electric supply signal is detected to reach the zero crossing point, the fan circuit and the turntable circuit are controlled to be powered off, therefore the interference to the voltage of the G pole of the IGBT can be reduced, when the inductive loads (i.e., the fan and the turntable) are turned off.

In any one of the above embodiments, the power-on and power-off of the inverter circuit can be controlled by a microwave relay.

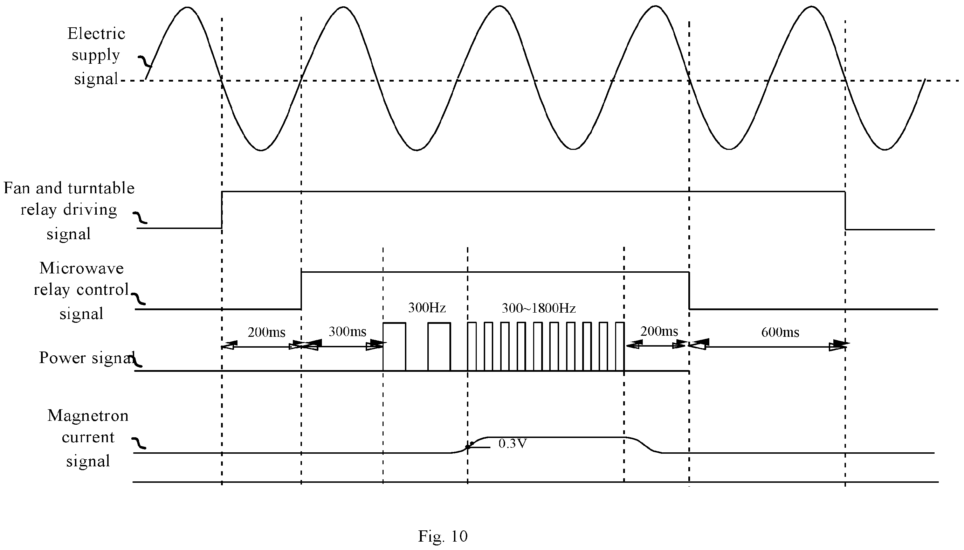

The overall control solution of the present invention will be described below with reference to Fig. 10.

Fig. 10 shows a schematic diagram of timing of signals in a control process of a microwave oven circuit according to an embodiment of the present invention.

The control solution in the related art is as follows: when the microwave relay (i.e., power is supplied to the inverter) of the microwave oven is started, the fan and the turntable relay are also turned on at the same time. Because the fan and the turntable are both inductive loads, electromagnetic radiation and voltage interference are generated during turn-on, meanwhile due to the complicated electric connecting lines of the microwave oven, it is impossible to focus on a specific line, and the radiation is also difficult to measure. Thus, in order to reduce the voltage abnormality (i.e., abnormal rise) of the G pole of the IGBT, in the embodiment, the interference of the fan and the turntable is minimized, and the specific process is as follows:
As shown in Fig. 10, when the instruction of starting the microwave oven is received, fan and turntable relays are started at the zero crossing point of the electric supply signal to delay for a period of time, for example, more than 200ms after the fan and the turntable are turned on, and then when the electric supply signal reaches the zero crossing point, the microwave relay is started to supply power to the inverter so as to reduce the interference signal to the voltage of the G pole of the IGBT generated by the simultaneous starting of the fan and turntable relays and the microwave relay. Moreover, when the electric supply signal reaches the zero crossing point, the microwave relay is started to avoid the damage to the entire rectifier bridge stack by the reverse high voltage generated to the rectifier bridge stack at the moment of starting the microwave relay. The starting process of the microwave relay is a power-on process of the inverter.

When the microwave relay is turned on, namely, when the electric power signal is provided for the inverter, the power signal is not immediately provided for the inverter, but a period of time is delayed, for example, more than 300ms to reserve an enough power-on initialization time for the devices in the inverter circuit to ensure no random action of the inverter. The stage is called an initialization stage.

Then, after the initialization stage, a preheating stage is executed to provide preheating frequency of 300Hz for the inverter. After the inverter receives the preheating frequency, the inverter is started at a smaller power to avoid the problem of power overshoot in the startup process. The preheating frequency can be the lowest frequency for maintaining the continuous work of the inverter, or any value less than or equal to half of the lowest frequency for maintaining the continuous work of the inverter.

At the preheating stage, the current signal of the magnetron is detected, an AD value is obtained by filtering and analog to digital conversion processing, and if the AD value is greater than a predetermined value, a full-power operation stage is entered.

Generally, the predetermined value is relatively small and is related to the value of the device shown in Fig. 7. In a preferred embodiment of the present invention, if the first resistor 131 is 10K, the second resistor 132 is 1M, and the electrolytic capacitor 135 is 2.2uF, at this time, the predetermined value can be selected as 0.3V, and 0.3V represents a symbol indicating that the magnetron starts working; however, the predetermined value cannot be too large, such as 0.5V or more, because at a low temperature, the current of the magnetron at the initial working stage is smaller than that at a room temperature, which will lead to always staying at the preheating stage.

In one embodiment of the present invention, the predetermined value compared with the AD value can be selected from any value less than or equal to one-sixth of the current signal in the magnetron when the electric control boards inputs a power signal with the target frequency to the inverter.

Finally, at the full-power operation stage, the electric control board inputs a power signal with the target frequency to the inverter.

For example, the electric control board needs to output a power of 1500W to the inverter, the electric control board outputs the preheating frequency of 300Hz at the preheating stage and outputs the frequency of 1500Hz when the AD value is greater than 0.3V, and in this way, the power overshoot problem in the startup process can be reduced.

When the inverter is running operating at full power, if the inverter is required to stop working, the input of the power signal to the inverter must be stopped at first, and after delaying for a period of time, such as more than 200ms, the microwave relay is turned off; because when the electric control board stops inputting the power signal to the inverter, the inverter needs to undergoes a process in which the power is reduced to zero and a corresponding discharging process, if the microwave relay is turned off quickly, the turning off process is incomplete, resulting in an abnormal phenomenon. Meanwhile, it should be noted that the microwave relay is turned off when the electric supply signal reaches the zero crossing point.

In addition, after the microwave relay is turned off, after a period of time, when the electric supply signal reaches the zero crossing point, the fan and the turntable relays are turned off, for example, the fan and the turntable relays are turned off 600ms later, which can also reduce the influence on the voltage of the G pole of the IGBT when the inductive loads are turned off.

It should be noted by those skilled in the art that the specific numerical values shown in Fig. 10 only represent one specific embodiment and are not specifically limited.

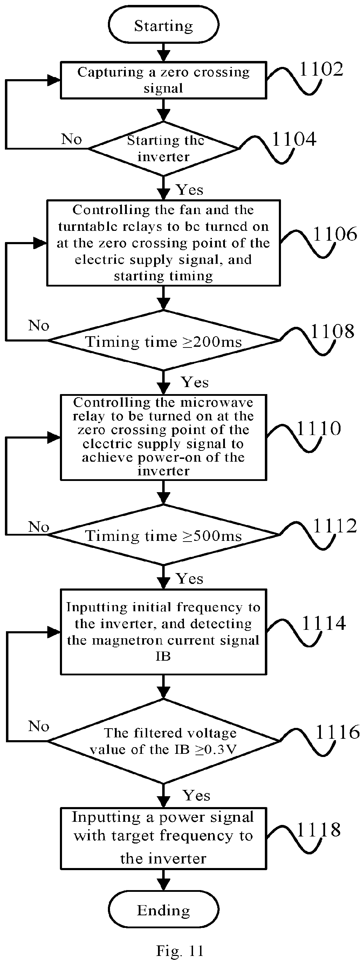

The process of starting the inverter shown in Fig. 10 is as shown in Fig. 11, including:
Step 1102, capturing a zero crossing signal of electric supply;
step 1104, judging whether the inverter is started, and if so, executing step 1106; otherwise, returning to step 1102;
step 1106, controlling the fan and the turntable relays to be turned on at the zero crossing point of the electric supply signal, and starting timing
step 1108, judging whether the timing time is greater than or equal to 200ms, and if so, executing step 1110; otherwise, returning to step 1106;
step 1110, controlling the microwave relay to be turned on when the electric supply signal reaches the zero crossing point to achieve power-on of the inverter;
step 1112, judging whether the timing time is greater than or equal to 500ms, and if so, executing step 1114; otherwise, returning to step 1110;
step 1114, inputting an initial power to the inverter, and detecting a current signal IB in the magnetron;
step 1116, judging whether a filtered voltage value of the IB is greater than or equal to 0.3V, and if so, executing step 1118; otherwise, returning to step 1114; and
step 1118, inputting the power signal with the target frequency to the inverter.

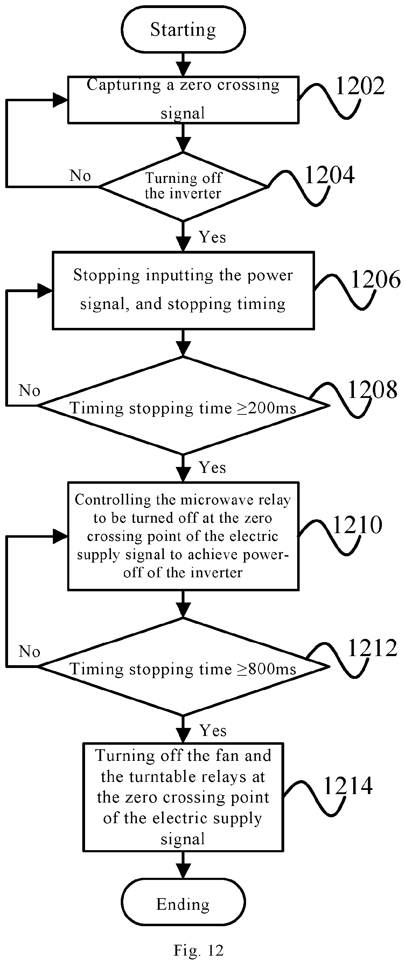

The process of turning off the inverter as shown in Fig. 10 is as shown in Fig. 12, including:
Step 1202, capturing a zero crossing signal of electric supply;
step 1204, judging whether the inverter is turned off, and if so, executing step 1206; otherwise, returning to step 1202;
step 1206, stopping inputting the power signal to the inverter, and stopping timing;
step 1208, judging whether the timing stopping time is greater than or equal to 200ms, and if so, executing step 1210; otherwise, returning to step 1206;
step 1210, controlling the microwave relay to be turned off when the electric supply signal reaches the zero crossing point to achieve power-off of the inverter;
step 1212, judging whether the timing stopping time is greater than or equal to 800ms, and if so, executing step 1214; otherwise, returning to step 1210; and
step 1214, turning off the fan and turntable relays at the zero crossing point of the electric supply signal.

In one embodiment of the present invention, since the microwave oven sold in Japan has a mandatory authentication requirement that the input current cannot exceed 15A, in order to meet the corresponding requirements, the control mode of the inverter in the microwave oven sold in Japan is distinguished from other conventional control modes, different preheating frequency modes are adopted, specifically, when the preheating frequency in the conventional control mode is 300Hz, the preheating frequency in the control mode of the inverter in the microwave oven sold in Japan is 100Hz.

In the technical solution of the above embodiment of the present invention, the current in the magnetron is used as the key signal for starting the inverter by the electric control board, and relatively reasonable design is performed on the starting and turning off of the inverter; meanwhile, the starting timing of other loads in the starting and turning off processes of the inverter is regulated accordingly to reduce the interference voltage of the G pole of the IGBT; and in addition, the electric power of the inverter is conveyed at the zero crossing point of the electric supply voltage, thereby reducing the reverse voltage across the rectifier bridge stack, improving the reliability and prolonging the service life of the rectifier circuit.

The technical solution of the present invention has been described in detail above with reference to the drawings. The present invention proposes a new microwave oven circuit control solution, which can reduce the voltage across the rectifier bridge stack when the inverter is started so as to avoid damage to the rectifier bridge stack due to the excessively high voltage across the rectifier bridge stack and to prevent the G pole of the IGBT from being damaged by the overlarge voltage.

Described above are merely preferred embodiments of the present invention, which are not intended to limit the present invention. For those skilled in the art, the present invention may have various changes and modifications. Any modifications, equivalent replacements and improvements made within the principle of the present invention shall fall within the protection scope of the present invention.

## Claims

1. A control method of a microwave oven circuit, wherein the microwave oven circuit comprises a magnetron (21) and an inverter circuit (22) for driving the magnetron (21) to work, and the control method comprises:
when the inverter circuit (22) needs to be started, detecting a zero crossing point of an electric supply signal for supplying power to the microwave oven circuit;
when the electric supply signal is detected to reach the zero crossing point, controlling the inverter circuit (22) to be powered on;
when the power-on time length of the inverter circuit (22) reaches a first predetermined time length, inputting a first power signal with a frequency lower than a target frequency to the inverter circuit (22);
detecting the current in the magnetron (21); and
when the current in the magnetron (21) reaches a predetermined current value, inputting a second power signal with a frequency equal to the target frequency to the inverter circuit (22).

2. The control method of the microwave oven circuit according to claim 1, wherein the microwave oven circuit further comprises a fan circuit and a turntable circuit, and the control method further comprises:
when an instruction of starting a microwave oven is received, if the electric supply signal is detected to reach the zero crossing point, controlling the fan circuit and the turntable circuit to be turned on; and
when the fan circuit and the turntable circuit are controlled to be turned on for a second predetermined time length, determining that the inverter circuit (22) needs to be started.

3. The control method of the microwave oven circuit according to claim 2, further comprising:
when an instruction of turning off the microwave oven is received, stopping inputting the power signal to the inverter circuit (22); and
when the time length of stopping inputting the power signal to the inverter circuit (22) reaches a third predetermined time length, if the electric supply signal is detected to reach the zero crossing point, controlling the inverter circuit (22) to be powered off.

4. The control method of the microwave oven circuit according to claim 3, further comprising:
after the inverter circuit (22) is controlled to be powered off for a fourth predetermined time length, if the electric supply signal is detected to reach the zero crossing point, controlling the fan circuit and the turntable circuit to be powered off.

5. The control method of the microwave oven circuit according to claim 4, wherein:
the first predetermined time length is greater than or equal to 300 milliseconds;
the second predetermined time length is greater than or equal to 200 milliseconds;
the third predetermined time length is greater than or equal to 200 milliseconds; and
the fourth predetermined time length is greater than or equal to 600 milliseconds.

6. The control method of the microwave oven circuit according to any preceding claim, wherein:
the frequency of the first power signal is the lowest frequency for maintaining the continuous work of the inverter circuit.

7. The control method of the microwave oven circuit according to any preceding claim, wherein the frequency of the first power signal is less than or equal to half of the lowest frequency for maintaining the continuous work of the inverter circuit.

8. The control method of the microwave oven circuit according to any preceding claim, wherein the predetermined current value is less than or equal to one-sixth of the current value in the magnetron when the inverter circuit works at the input of the target frequency.

9. A microwave oven circuit comprising a magnetron (21), an inverter circuit (22) for driving the magnetron (21) to work, and a control device (900); the control device (900) comprising a current detection unit (908) for detecting a current in the magnetron; the microwave oven circuit being **characterised in that** the control device (900) comprises:
a zero crossing point detection unit (902) for, when the inverter circuit (22) needs to be started, detecting a zero crossing point of an electric supply signal for supplying power to the microwave oven circuit;
a first control unit (904) for, when the zero crossing point detection unit (902) detects that the electric supply signal reaches the zero crossing point, controlling the inverter circuit (22) to be powered on; and
a second control unit (906) for, when the power-on time length of the inverter circuit (22) reaches a first predetermined time length, inputting a first power signal with a frequency lower than a target frequency to the inverter circuit (22), and
when the current detection unit (908) detects that the current in the magnetron (21) reaches a predetermined current value, inputting a second power signal with a frequency equal to the target frequency to the inverter circuit (22).

10. A microwave oven, comprising the microwave oven circuit according to claim 9.

## Patentansprüche

1. Steuerverfahren für eine Mikrowellenherdschaltung, wobei die Mikrowellenherdschaltung ein Magnetron (21) und eine Wechselrichterschaltung (22) zum Antreiben des Magnetrons (21) zum Arbeiten aufweist und das Steuerverfahren Folgendes aufweist:
wenn die Wechselrichterschaltung (22) gestartet werden muss, Erkennen eines Nulldurchgangspunkts eines Stromversorgungssignals zum Versorgen der Mikrowellenherdschaltung mit Leistung;
wenn erkannt wird, dass das Stromversorgungssignal den Nulldurchgangspunkt erreicht, Ansteuern der Wechselrichterschaltung (22), so dass sie eingeschaltet wird;
wenn die Dauer der Einschaltzeit der Wechselrichterschaltung (22) eine erste vorbestimmte Zeitdauer erreicht, Eingeben eines ersten Leistungssignals mit einer Frequenz, die niedriger als eine Sollfrequenz ist, in die Wechselrichterschaltung (22);
Erkennen des Stroms in dem Magnetron (21); und,
wenn der Strom in dem Magnetron (21) einen vorbestimmten Stromwert erreicht, Eingeben eines zweiten Leistungssignals mit einer Frequenz, die gleich der Sollfrequenz ist, in die Wechselrichterschaltung (22).

2. Steuerverfahren für die Mikrowellenherdschaltung nach Anspruch 1, wobei die Mikrowellenherdschaltung ferner eine Gebläseschaltung und eine Drehtellerschaltung aufweist und das Steuerverfahren ferner Folgendes aufweist:
wenn eine Anweisung zum Starten eines Mikrowellenherds empfangen wird, falls erkannt wird, dass das Stromversorgungssignal den Nulldurchgangspunkt erreicht, Ansteuern der Gebläseschaltung und der Drehtellerschaltung, so dass sie eingeschaltet werden; und,
wenn die Gebläseschaltung und die Drehtellerschaltung angesteuert werden, so dass sie für eine zweite vorbestimmte Zeitdauer eingeschaltet werden, Bestimmen, dass die Wechselrichterschaltung (22) gestartet werden muss.

3. Steuerverfahren für die Mikrowellenherdschaltung nach Anspruch 2, die ferner Folgendes aufweist:
wenn eine Anweisung zum Abschalten des Mikrowellenherds empfangen wird, Beenden der Eingabe des Leistungssignals in die Wechselrichterschaltung (22); und,
wenn die Zeitdauer des Abschaltens der Eingabe des Leistungssignals in die Wechselrichterschaltung (22) eine dritte vorbestimmte Zeitdauer erreicht, falls erkannt wird, dass das Stromversorgungssignal den Nulldurchgangspunkt erreicht, Ansteuern der Wechselrichterschaltung (22), so dass sie abgeschaltet wird.

4. Steuerverfahren für die Mikrowellenherdschaltung nach Anspruch 3, das ferner Folgendes aufweist:
nach Ansteuern der Wechselrichterschaltung (22), so dass sie für eine vierte vorbestimmte Zeitdauer abgeschaltet wird, falls erkannt wird, dass das Stromversorgungssignal den Nulldurchgangspunkt erreicht, Ansteuern der Gebläseschaltung und der Drehtellerschaltung, so dass sie abgeschaltet werden.

5. Steuerverfahren für die Mikrowellenherdschaltung nach Anspruch 4, wobei:
die erste vorbestimmte Zeitdauer größer oder gleich 300 Millisekunden ist;
die zweite vorbestimmte Zeitdauer größer oder gleich 200 Millisekunden ist;
die dritte vorbestimmte Zeitdauer größer oder gleich 200 Millisekunden ist; und
die vierte vorbestimmte Zeitdauer größer oder gleich 600 Millisekunden ist.

6. Steuerverfahren für die Mikrowellenherdschaltung nach einem der vorhergehenden Ansprüche, wobei:
die Frequenz des ersten Leistungssignals die niedrigste Frequenz zum Aufrechterhalten der kontinuierlichen Arbeit der Wechselrichterschaltung ist.

7. Steuerverfahren für die Mikrowellenherdschaltung nach einem der vorhergehenden Ansprüche, wobei die Frequenz des ersten Leistungssignals kleiner oder gleich der Hälfte der niedrigsten Frequenz zum Aufrechterhalten der kontinuierlichen Arbeit der Wechselrichterschaltung ist.

8. Steuerverfahren für die Mikrowellenherdschaltung nach einem der vorhergehenden Ansprüche, wobei der vorbestimmte Stromwert kleiner oder gleich einem Sechstel des Stromwerts in dem Magnetron ist, wenn die Wechselrichterschaltung bei der Eingabe der Sollfrequenz arbeitet.

9. Mikrowellenherdschaltung, die ein Magnetron (21), eine Wechselrichterschaltung (22) zum Antreiben des Magnetrons (21) zum Arbeiten und eine Steuervorrichtung (900) aufweist; wobei die Steuervorrichtung (900) eine Stromerkennungseinheit (908) zum Erkennen eines Stroms in dem Magnetron aufweist;
wobei die Mikrowellenherdschaltung **dadurch gekennzeichnet ist, dass** die Steuervorrichtung (900) Folgendes aufweist:
eine Nulldurchgangspunkt-Erkennungseinheit (902) zum Erkennen eines Nulldurchgangspunkts eines Stromversorgungssignals zum Versorgen der Mikrowellenherdschaltung mit Leistung, wenn die Wechselrichterschaltung (22) gestartet werden muss;
eine erste Steuereinheit (904) zum Ansteuern der Wechselrichterschaltung (22), so dass sie eingeschaltet wird, wenn die Nulldurchgangspunkt-Erkennungseinheit (902) erkennt, dass das Stromversorgungssignal den Nulldurchgangspunkt erreicht; und
eine zweite Steuereinheit (906) zum Eingeben eines ersten Leistungssignals mit einer Frequenz, die niedriger als eine Sollfrequenz ist, in die Wechselrichterschaltung (22), wenn die Dauer der Einschaltzeit der Wechselrichterschaltung (22) eine erste vorbestimmte Zeitdauer erreicht; und,
wenn die Stromerkennungseinheit (908) erkennt, dass der Strom in dem Magnetron (21) einen vorbestimmten Stromwert erreicht, Eingeben eines zweiten Leistungssignals mit einer Frequenz, die gleich der Sollfrequenz ist, in die Wechselrichterschaltung (22).

10. Mikrowellenherd, der die Mikrowellenherdschaltung nach Anspruch 9 aufweist.

## Revendications

1. Procédé de commande d'un circuit de four à micro-ondes, dans lequel le circuit de four à micro-ondes comprend un magnétron (21) et un circuit inverseur (22) pour un entraînement du magnétron (21) à fonctionner, et le procédé de commande comprend :
lorsque le circuit inverseur (22) doit être démarré, une détection d'un point de passage par zéro d'un signal d'alimentation électrique pour alimenter en électricité le circuit de four à micro-ondes ;
lorsque le signal d'alimentation électrique est détecté comme atteignant le point de passage par zéro, une commande du circuit inverseur (22) pour une mise sous tension ;
lorsque la durée de mise sous tension du circuit inverseur (22) atteint une première durée prédéterminée, une entrée d'un premier signal d'alimentation avec une fréquence inférieure à une fréquence cible au circuit inverseur (22) ;
une détection du courant dans le magnétron (21) ; et
lorsque le courant dans le magnétron (21) atteint une valeur de courant prédéterminée, une entrée d'un second signal d'alimentation avec une fréquence égale à la fréquence cible au circuit inverseur (22).

2. Procédé de commande du circuit de four à micro-ondes selon la revendication 1, dans lequel le circuit de four à micro-ondes comprend en outre un circuit de ventilateur et un circuit de plateau rotatif, et le procédé de commande comprend en outre :
lorsqu'une instruction de démarrage d'un four à micro-ondes est reçue, si le signal d'alimentation électrique est détecté comme atteignant le point de passage par zéro, une commande du circuit de ventilateur et du circuit de plateau rotatif pour être allumé ; et
lorsque le circuit de ventilateur et le circuit de plateau rotatif sont commandés pour être allumés pour une deuxième durée prédéterminée, une détermination du fait que le circuit inverseur (22) doit être démarré.

3. Procédé de commande du circuit de four à micro-ondes selon la revendication 2, comprenant en outre :
lorsqu'une instruction de mise à l'arrêt du four à micro-ondes est reçue, un arrêt d'une entrée du signal d'alimentation au circuit inverseur (22) ; et
lorsque la durée d'arrêt d'une entrée du signal d'alimentation au circuit inverseur (22) atteint une troisième durée prédéterminée, si le signal d'alimentation électrique est détecté comme atteignant le point de passage par zéro, une commande du circuit inverseur (22) pour une mise hors tension.

4. Procédé de commande du circuit de four à micro-ondes selon la revendication 3, comprenant en outre :
après que le circuit inverseur (22) est commandé pour une mise hors tension pour une quatrième durée prédéterminée, si le signal d'alimentation électrique est détecté comme atteignant le point de passage par zéro, une commande du circuit de ventilateur et du circuit de plateau rotatif pour une mise hors tension.

5. Procédé de commande du circuit de four à micro-ondes selon la revendication 4, dans lequel :
la première durée prédéterminée est supérieure ou égale à 300 millisecondes ;
la deuxième durée prédéterminée est supérieure ou égale à 200 millisecondes ;
la troisième durée prédéterminée est supérieure ou égale à 200 millisecondes ; et
la quatrième durée prédéterminée est supérieure ou égale à 600 millisecondes.

6. Procédé de commande du circuit de four à micro-ondes selon une quelconque revendication précédente, dans lequel :
la fréquence du premier signal d'alimentation est la fréquence la plus faible pour un maintien du fonctionnement continu du circuit inverseur.

7. Procédé de commande du circuit de four à micro-ondes selon une quelconque revendication précédente, dans lequel la fréquence du premier signal d'alimentation est inférieure ou égale à la moitié de la fréquence la plus basse pour un maintien du fonctionnement continu du circuit inverseur.

8. Procédé de commande du circuit de four à micro-ondes selon une quelconque revendication précédente, dans lequel la valeur de courant prédéterminée est inférieure ou égale à un sixième de la valeur de courant dans le magnétron lorsque le circuit inverseur fonctionne au niveau de l'entrée de la fréquence cible.

9. Circuit de four à micro-ondes comprenant un magnétron (21), un circuit inverseur (22) pour un entraînement du magnétron (21) à fonctionner, et un dispositif de commande (900) ; le dispositif de commande (900) comprenant une unité de détection de courant (908) pour une détection d'un courant dans le magnétron ;
le circuit de four à micro-ondes étant **caractérisé en ce que** le dispositif de commande (900) comprend :
une unité de détection de point de passage par zéro (902) pour, lorsque le circuit inverseur (22) doit être démarré, une détection d'un point de passage par zéro d'un signal d'alimentation électrique pour alimenter en électricité le circuit de four à micro-ondes ;
une première unité de commande (904) pour, lorsque l'unité de détection de point de passage par zéro (902) détecte que le signal d'alimentation électrique atteint le point de passage par zéro, une commande du circuit inverseur (22) pour une mise sous tension ; et
une seconde unité de commande (906) pour, lorsque la durée de mise sous tension du circuit inverseur (22) atteint une première durée prédéterminée, une entrée d'un premier signal d'alimentation avec une fréquence inférieure à une fréquence cible au circuit inverseur (22), et
lorsque l'unité de détection de courant (908) détecte que le courant dans le magnétron (21) atteint une valeur de courant prédéterminée, une entrée d'un second signal d'alimentation avec une fréquence égale à la fréquence cible au circuit inverseur (22).

10. Four à micro-ondes, comprenant le circuit de four à micro-ondes selon la revendication 9.
